# EUROPÄISCHE PATENTANMELDUNG

(11) **EP 2 942 909 A1**
(43) Veröffentlichungstag der Anmeldung: **11.11.2015**
(21) Anmeldenummer: 14167182.6
(22) Anmeldetag: 06.05.2014
(51) Int. Cl.: H04L 12/58, H04L 12/18, H04L 29/08, G06Q 10/10

(54) **Verfahren und System zur Unterstützung einer Kommunikation zwischen einer Vielzahl von Kommunikationsteilnehmern**

(71) Anmelder: Siemens Aktiengesellschaft, 80333 München (DE)
(72) Erfinder: Diezel, Matthias, 90482 Nürnberg (DE); Fürst, Johannes, 85356 Freising (DE)

(57) **Zusammenfassung**

Es wird ein Verfahren und ein System vorgeschlagen zur Unterstützung einer Kommunikation zwischen einer Vielzahl von Kommunikationsteilnehmern (1, 2, 3, 4), die an einem Arbeitsprozess beteiligt sind und über einen Arbeitsgegenstand kommunizieren. Hierbei ist bei dem Verfahren ein Herstellen einer Kommunikation zwischen mindestens zwei Kommunikationsteilnehmern (1, 2, 3, 4) unter Berücksichtigung ihrer jeweiligen Rolle innerhalb des Arbeitsprozesses vorgesehen.

## Beschreibung

Die Erfindung betrifft den Bereich der Kommunikationstechnik. Insbesondere betrifft die Erfindung ein Verfahren und ein System zur Unterstützung einer Kommunikation zwischen einer Vielzahl von Kommunikationsteilnehmern

Bei Prozessen und Vorgängen, die in produzierenden Industriebetrieben durchlaufen werden, sind viele Menschen in unterschiedlichen Rollen beteiligt. Während eines Produktentstehungsprozesses und in der Maschinen- und Anlagenwartung kommt es vielfach zu Klärungs- und Abstimmungsbedarf zwischen den beteiligten Personen. Bei der zunehmenden globalen Arbeitsteilung ist eine Schwierigkeit, dass ein gerade benötigter Ansprechpartner für eine Fragenklärung nicht im gleichen Raum sondern möglicherweise auf einem anderen Kontinent arbeitet.

Es ergeben sich Fragestellungen, die ein Kommunikationssystem zu lösen hat, wie beispielsweise:
1. Wie findet man den Ansprechpartner, von dem man nur die Rolle kennt?

Bei der Verwendung von modernen Kommunikationsmitteln, wie z.B. Instant Messaging, wird man von den Systemen durch Kontaktlisten oder Adressbücher unterstützt. Der Zweck der Listen ist die Verwaltung bereits bekannter Kontakte. Diese sind hilfreich, wenn man speziell eine Person ansprechen möchte. In vielen Kommunikationssituationen ist zunächst aber der richtige Ansprechpartner für das Anliegen unbekannt. Man hat lediglich eine Information darüber, welche Rolle die gesuchte Person für das eigene Anliegen spielt.

Beispielsweise möchte ein NC-Programmierer in der Arbeitsvorbereitung einem Konstrukteur eines Bauteils eine Frage stellen. In diesem Fall stellt sich dem NC-Programmierer (Ersteller eines Programms zum Steuern einer Werkzeugmaschine) die Schwierigkeit, dass er zunächst den zuständigen Konstrukteur ermitteln muss. Dies kann in großen Firmen oder Organisationen mitunter aufwändig sein. Der Konstrukteur befindet sich beispielsweise in einer anderen Abteilung und arbeitet eventuell an einem anderen Standort als der NC-Programmierer, beispielsweise auch im Ausland. Der NC-Programmierer weiß, dass er den Konstrukteur (Rolle) für dieses Bauteil (Kontext) benötigt. Da aber sehr viele Konstrukteure in der Firma arbeiten, weiß der NC-Programmierer nicht, welche Person diese Rolle in seinem Fall inne hat.

Bisher gab es im Wesentlichen die Möglichkeit, willkürlich einen Kontakt anzusprechen, von dem man glaubt, dass er weiß, wer die gesuchte Person ist. Dieser Suchprozess kann sich dann über mehrere Stufen fortsetzen. Eine zusätzliche Möglichkeit ergibt sich dann, wenn ein Managementsystem die Zuständigkeiten und Transaktionen eines Personenkreises verwaltet. Dann kann man in dem Managementsystem den richtigen Ansprechpartner ermitteln und anschließend mit Hilfe des Messengers direkt kontaktieren.

Es würde beispielsweise der NC-Programmierer im PLM-System (Product-Lifecycle-Management-System) prüfen, wer das Bauteil konstruiert hat. Anschließend könnte der NC-Programmierer diese Person kontaktieren. Falls die Person nicht erreichbar ist, kann der NC-Programmierer nach einem zuständigen Vertreter suchen. Im Falle von statischen Zuständigkeiten kann ein Instant-Messenger so organisieren werden, dass statt personalisierter Kontakteinträge funktionale Kontakteinträge mit den Rollen anlegt werden. Diese Vorgehensweise ist jedoch ungünstig, sobald die Zuständigkeiten wechseln können bzw. mehrere Personen die gleiche Rolle ausfüllen.
2. Wie bringt man seine Fragestellung in den Arbeitskontext seines Gesprächspartners?

Neben der Schwierigkeit, den passenden Ansprechpartner zu finden, gibt es auch noch die Schwierigkeit, dass Mitarbeiter in verschiedenen Rollen mit unterschiedlichen Sichten und unterschiedlichen Aufgaben an einem Arbeitsgegenstand arbeiten:
So steht beispielsweise für einen Maschinenbediener hauptsächlich das NC-Programm für das Bearbeitungsteil, für den Konstrukteur dagegen das 3D-Modell im Vordergrund.

Wenn der Maschinenbediener aufgrund eines defekten Fräswerkzeuges dieses durch ein anderes Fräswerkzeug ersetzen möchte, hat er die Folgen für die Konstruktion zu berücksichtigen: Ein unterschiedlicher Fräser-Kantenradius führt zu einer leichten Geometrieveränderung, die sich aber unter Umständen gravierend auswirken kann aufgrund eines geänderten Spannungsverlaufs. Für den Maschinenbediener ist nur die NC-Programmzeile mit dem Werkzeugaufruf relevant.

Der Konstrukteur, der eine Änderung beurteilen möchte, hat den Wunsch das 3D-Modell zu sehen, um die Zusammenhänge bewerten zu können.

Im Falle der Anlagenwartung ist beispielsweise für einen Mechaniker die Montageanleitung einer Anlagenkomponente von Interesse, während für einen Elektroniker der Schaltplan relevant ist.

Wenn Personen aus verschiedenen Rollen beispielsweise über ein Problem mit einem Teil diskutieren, muss sich in der Regel jeder selbst das jeweilige Teil suchen und in seiner spezifischen Sichtweise öffnen. Dabei kann es zu Irrtümern und Missverständnissen kommen.
3. Wie kann man eine Information hinterlassen für die der Empfänger noch nicht feststeht?

Ein drittes Problem ergibt sich, wenn einer Person eine Nachricht übermittelt werden soll, die erst später im Arbeitsprozess das Bauteil bearbeiten wird. Die Schwierigkeit ist, dass die Personen oft noch gar nicht bekannt sind. Zum Beispiel möchte der NC-Programmierer dem Maschinenbediener einen Hinweis für die Bearbeitung übermitteln. Es ist zu diesem Zeitpunkt aber noch nicht entschieden, auf welcher konkreten Maschine das Bauteil gefertigt wird und wer der Maschinenbediener sein wird.

Um Hinweise an nachfolgende Personen im Arbeitsprozess zu übermitteln, gibt es heute nur die Möglichkeit, diese in den Arbeitsunterlagen zu hinterlegen. Eine Garantie, dass diese beim richtigen Adressaten ankommen und dieser sie auch liest, ist allerdings nicht gegeben.

Es liegt daher der vorliegenden Erfindung die Aufgabe zugrunde, die Kommunikation zwischen Personen oder Kommunikationsteilnehmern zu erleichtern, die an einem gemeinsamen Arbeitsprozess beteiligt sind.

Diese Aufgabe wird mit einem Verfahren zur Unterstützung einer Kommunikation zwischen einer Vielzahl von Kommunikationsteilnehmern, die an einem Arbeitsprozess beteiligt sind und über einen Arbeitsgegenstand kommunizieren gelöst. Hierbei wird durch das Verfahren eine Kommunikation zwischen mindestens zwei Kommunikationsteilnehmern unter Berücksichtigung ihrer jeweiligen Rolle innerhalb des Arbeitsprozesses hergestellt.

Unter "Rolle" ist hier ein Aufgabenbereich zu verstehen, in dem eine Person tätig ist oder spezialisiert ist. Beispiele für verschiedene Rollen innerhalb eines Arbeitsprozesses sind: Konstrukteur, technischer Zeichner, Entwickler, Programmierer, Prüfer in einem Testlabor, Maschinenbediener, etc. Hierbei ist es möglich, dass eine Person mehrere Rollen inne hat, wie beispielsweise ein Entwickler, der eine technische Zeichnung erstellt.

Es findet demnach statt einer personen-gebundenen Kommunikation eine rollenbasierte Kommunikation statt. Dies bedeutet, dass die Herstellung einer Kommunikationsverbindung, also das Herstellen eines Kontaktes zwischen zwei Personen oder Kommunikationsteilnehmern, anhand ihrer Rolle ausgewählt wird. Nach dem Herstellen einer Kommunikation oder Kommunikationsverbindung können die Personen Informationen zu einer bestimmten Fragestellung austauschen. Die Kommunikation kann hierbei schriftlich, z.B. mit einer Textnachricht, mündlich, z.B. durch das Herstellen einer Telefonverbindung, sowie in Echtzeit, z.B. durch ein Telefongespräch, oder zeitverzögert, z.B. durch eine Text-, Sprach- oder eine Videonachricht, geschehen. Je nach Art der Kommunikationsverbindung können Informationen einseitig bereitgestellt werden oder Informationen ausgetauscht werden.

In einem Ausführungsbeispiel kann das Verfahren ferner ein Anfragen zum Herstellen einer Kommunikation aufweisen, durch ein Senden einer Objekt-Identität (Objekt-ID), die den Arbeitsgegenstand charakterisiert, und einer Rollen-Identität (Rollen-ID), die die Rolle innerhalb des Arbeitsprozesses charakterisiert. Mit eindeutigen Identitäten ist eine Zuordnung zur Vorbereitung des Herstellens einer Kontaktaufnahme einfach möglich. Diese Anfrage kann durch eine zentrale Einheit in einem Kommunikationssystem ausgewertet werden, beispielsweise einer Rollenvermittlungs-Komponente.

Ferner kann in einem Ausführungsbeispiel vorgesehen werden, dass das Verfahren ein Bereitstellen eines Namens einer Person aufweist, die als Kommunikationsteilnehmer vorhanden ist. Dieses Bereitstellen kann beispielsweise in Reaktion auf eine Kontaktanfrage erfolgen.

In einem weiteren Ausführungsbeispiel kann vorgesehen werden, dass ein Verwenden von Information vorgesehen ist, die in einem Management-System hinterlegt ist, um einen Kommunikationsteilnehmer zu ermitteln. Ein Management-System kann Information über den gesamten Arbeitsprozess aufweisen, so dass dies eine Informationsquelle ist, die eine Kontaktvermittlung zwischen Kommunikationspartnern oder Kommunikationsteilnehmern erleichtert.

Ferner kann bei dem erfindungsgemäßen Verfahren in einer Ausführungsvariante ein Darstellen des Arbeitsgegenstandes in einer Arbeitsumgebung des Kommunikationsteilnehmers in Abhängigkeit seiner Rolle vorgesehen werden. Die Darstellung kann hierbei graphisch und/oder textuell erfolgen.

Ferner kann mit Vorteil in einem Ausführungsbeispiel des Verfahrens ein paralleles Herstellen einer Kommunikation zwischen mehreren Kommunikationsteilnehmern in Bezug auf einen Arbeitsgegenstand vorgesehen werden. Hierbei ergibt sich beispielsweise die Möglichkeit einer Gesprächsrunde oder eines Chats, der virtuell stattfinden kann mit Kommunikationsteilnehmern, die sich jeweils an ihrem Arbeitsplatz befinden.

In einem weiteren Ausführungsbeispiel kann bei dem Verfahren vorgesehen werden ein Bereitstellen einer Liste mit Kommunikationsteilnehmern, wobei die Liste individuell an die Rolle der Person angepasst ist, die einen Kommunikationsteilnehmer sucht. Dies bedeutet, dass jeder Kommunikationsteilnehmer eine Liste oder ähnliche geeignete Gruppierungen erhält, die bei seiner Tätigkeit mit hoher Wahrscheinlichkeit von Nutzen sein können.

Ferner kann in einer Ausführungsvariante des Verfahrens eine Berücksichtigung von Abwesenheiten von Kommunikationsteilnehmern bei der Herstellung einer Kommunikation mit einem Kommunikationsteilnehmer vorgesehen werden. Dies hat den Vorteil, dass das Herstellen einer Kommunikation nicht verzögert wird, weil ein Kommunikationsteilnehmer nicht erreichbar ist, beispielsweise durch Urlaub. Es kann demnach eine Vertretung als Kommunikationsteilnehmer bereitgestellt werden. Ferner kann auch hinterlegt werden, wie lange ein Kommunikationsteilnehmer seine Abwesenheit geplant hat.

Ferner kann in einem Ausführungsbeispiel das Verfahren ein Unterstützen eines Workflows vorsehen, indem eine Bedingung vorgegeben wird, unter der die Bearbeitung einer Teilaufgabe des Arbeitsprozesses begonnen werden kann. Hierbei kann beispielsweise eine Teilaufgabe von einer ersten Person mit einer ersten Rolle erledigt werden und erst von einer zweiten Person mit einer zweiten Rolle bearbeitet werden, sofern die erste Person eine Freigabe gegeben hat.

Ferner kann in einem Ausführungsbeispiel des Verfahrens ein Hinterlegen einer Nachricht an eine relevante Person vorgesehen werden, wobei diese Person zum Zeitpunkt des Hinterlegens noch nicht feststeht. Dies ist beispielsweise der Fall, wenn die Produktion eines Produktes noch in der Planung ist, aber der Prototyp bereits von einem Konstrukteur entworfen wurde.

Ferner kann in einer Ausführungsvariante des Verfahrens ein Bereitstellen eines Namens zusätzlich zu der Rollenbezeichnung vorgesehen werden. Dies hat den Vorteil, wenn ein anfragender Kommunikationsteilnehmer einen Ansprechpartner vormerken möchte.

Die Aufgabe der Erfindung wird ferner mit einem System zur Unterstützung einer Kommunikation zwischen einer Vielzahl von Kommunikationsteilnehmern gelöst, die an einem Arbeitsprozess beteiligt sind und über einen Arbeitsgegenstand kommunizieren. Hierzu weist das System ein Kommunikationssystem auf, auf das eine Vielzahl von Kommunikationsteilnehmern Zugriff haben. Ferner weist das System ein Management-System auf, das Information über den Arbeitsprozess zur Verfügung stellt. Weiterhin weist das System eine Rollenvermittlungs-Komponente auf, die mit dem Kommunikationssystem und dem Management-System in Verbindung steht und die ein Herstellen eines Kontaktes oder einer Verbindung zwischen mindestens zwei Kommunikationsteilnehmern unter Berücksichtigung ihrer jeweiligen Rolle innerhalb des Arbeitsprozesses einleitet.

Hierbei kann die Rollenvermittlungs-Komponente computerimplementiert sein. Ferner kann das Management-System ein Fertigungsstand/Status in einem Produktentstehungsprozess bereitstellen. Auch kann in einem Ausführungsbeispiel vorgesehen werden, dass Informationen über einen gesamten Produktentstehungsprozess durch das Management-System bereitgestellt werden.

Ferner kann vorgesehen werden, dass die Rollenvermittlungs-Komponente des Systems Mittel aufweist, um eine Rolle in Verbindung mit dem Arbeitsgegenstand einem Kommunikationsteilnehmer zuzuordnen.

Die für das Verfahren beschriebenen Aspekte können ebenfalls in dem vorgeschlagenen System angewendet werden.

Insgesamt wird mit der vorliegenden Erfindung eine rollenbasierte Kollaboration oder Zusammenarbeit in einem Arbeitsprozess ermöglicht, beispielsweise in einer Fertigung.

Die hier vorgeschlagene Erfindung mit ihren Ausführungsvarianten erleichtert die direkte Kommunikation zwischen den an einem Prozess beteiligten Personen. Man muss nicht mehr wissen, welche spezifische Person man ansprechen muss, sondern man spricht nur noch eine Rolle im jeweiligen Kontext an. Außerdem wird den beteiligten Gesprächspartnern der passende Arbeitskontext hergestellt, und es ist möglich, Nachrichten für zukünftige Prozessbeteiligte zu hinterlegen.

Die Vermittlung zwischen den beteiligten Personen oder Kommunikationsteilnehmern übernimmt die Rollenvermittlungskomponente im Zusammenspiel mit dem Kommunikationssystem und mit einem oder mehreren Managementsystemen. Das Managementsystem kann je nach Anwendung unterschiedlich sein. Für eine Anwendung im Produktionsumfeld bietet sich die Verwendung eines PLM-Systems an, da hierbei alle relevanten Informationen zur Verfügung stehen.

Das vorgeschlagene System dient dazu, um im Kontext eines bestimmten Arbeitsgegenstands zu kommunizieren. Dabei ist es von Vorteil, dass jeder Kommunikationspartner auch den Gegenstand in seiner jeweiligen Arbeitsumgebung sieht. Beispielsweise ist für einen Maschinenbediener das NC-Programm von Interesse, für den Vorrichtungskonstrukteur das Bauteil mit seiner Vorrichtung und für den Konstrukteur das Bauteil mit Berechnungen. Da der Verbindungswunsch bezüglich einer konkreten Rolle geäußert wird, kann dem Gefragten das Bauteil in der zu dieser Rolle passenden Sicht angezeigt werden. Dies funktioniert selbst dann, wenn dieser Kommunikationspartner mehrere Rollen ausfüllen kann.

Dieses Merkmal ist besonders vorteilhaft, wenn es nicht um eine bilaterale Kommunikation geht, sondern der Anfragende mehrere Kommunikationspartner parallel anfragt, z.B. durch Einladung in einen gemeinsamen Chat-Room. Hier haben dann alle Kommunikationspartner die jeweils passende Sicht auf den Arbeitsgegenstand während sie gemeinsam über eine Fragestellung kommunizieren.

Bei Betrieb und Wartung einer Produktionsanlage kann beispielsweise beim Auftreten einer Störung der Wartungstechniker parallel mehrere Experten aus unterschiedlichen Fachrichtungen konsultieren, die dann jeweils in ihrer spezifischen Sicht auf das Problem schauen können.

Weiter kann das Kommunikationssystem in Zusammenwirkung mit der Rollenvermittlungskomponente die Liste der für einen Anwender kontaktierbaren Rollen an seine eigene Rolle anpassen. Beispielsweise muss ein Maschinenbediener in der Fertigung zu ganz anderen Personengruppen Kontakt aufnehmen als ein Konstrukteur.

Wie ein solches Kommunikationssystem in die Arbeitsumgebung des Benutzers eingebunden ist, kann unterschiedlich ausgeprägt sein:
Zum einen wäre es denkbar, dass ein solches Messenger-System direkt in einer Arbeitsanwendung, wie beispielsweise einem CAD-System oder einem anderen Zeichenprogramm eingebettet ist:
   Es kann die Kommunikation über eine Auswahlliste mit den verfügbaren Rollen gestartet werden. Statt die Funktion über ein Kontextmenü auszulösen, ist es auch möglich, dass ein Messenger in ein Fenster der Arbeitsanwendung integriert ist und die verfügbaren Rollen zu dem anzeigt, was gerade bearbeitet wird.

Ferner ist es auch möglich, den Messenger als eigene Anwendung zu betreiben. Diese Anwendung kann alle Arbeitsaufgaben einer Person mit den relevanten Rollen anzeigen.

Es kann dann ermöglicht werden, dass man sich aus dem betreffenden Arbeitspaket die richtige Rolle auswählt. Ein NC-Programmierer könnte beispielsweise ein separates Tool haben, in dem alle NC-Programme aufgelistet sind, die er zurzeit bearbeitet. Welche Person welche Rolle ausübt, kann sich ändern. Im obigen Beispiel wäre bei einem anderen NC-Programm für ein anderes Bauteil ein anderer Konstrukteur zuständig.

Da in den Managementsystemen mitunter der ganze Produktentstehungsprozess bekannt ist, können auch alle relevanten Rollen in diesem Prozess mit in diese Kommunikation eingebunden werden. Es wäre denkbar, dass beispielsweise der NC-Programmierer eine Nachricht an den Maschinenbediener schickt, der das NC-Programm in Zukunft einmal abarbeiten wird, auch wenn noch gar nicht festgelegt ist, welcher Bediener das Teil einmal auf welcher konkreten Maschine fertigen wird. Sobald ein Maschinenbediener dann das NC-Programm an einer Fertigungsmaschine aufruft, wird ihm sein Messenger die Nachricht anzeigen, da im Kontext dieses NC-Programms zu der Rolle Maschinenbediener eine Nachricht vorliegt. Damit kann der NC-Programmierer den Maschinenbediener beispielsweise auf besondere Schwierigkeiten bei der Bearbeitung hinweisen oder über Änderungen informieren. Da es für eine Person wichtig sein kann, vor einer Kontaktaufnahme zu wissen, wer der gesuchte Gesprächspartner ist, kann der Name und evtl. weitere Kontaktdaten der Kontaktperson dynamisch als Zusatz zu der Rollenbezeichnung dargestellt werden.

Außerdem kann in einem Ausführungsbeispiel vorgesehen werden, dass weitere Informationen aus den Managementsystemen nutzbar sind. Eine denkbare Anwendung wäre beispielsweise, den aktuellen Stand im Produktentstehungsprozess darzustellen. In vielen Betrieben wird über den gesamten Produktentstehungsprozess der aktuelle Status in einem System erfasst, z.B. dem PLM-System. Beispielsweise setzt der Konstrukteur den Status des Bauteils auf "freigegeben", wenn er seine Arbeit abgeschlossen hat, oder der Maschinenbediener meldet die Anzahl gefertigter Bauteile im System. Anhand einer farblichen Markierung an der jeweiligen Rolle könnte der Status des Bauteils in Bezug zu der jeweiligen Rolle visualisiert werden. Im Falle des NC-Programmierers könnte dies bedeuten, dass anhand einer farblichen Markierung erkannt werden kann, ob der Konstrukteur das Bauteil schon freigegeben hat, oder ob das NC-Programm schon auf der Maschine vorhanden ist und dort entweder gerade eingerichtet, gefertigt oder schon abgeschlossen ist. Dies hätte beispielsweise bei anstehenden Änderungen den Vorteil, dass sofort die Rolle und damit die Person angesprochen werden kann, die das entsprechende Teil gerade bearbeitet oder als nächstes erhält. Außerdem kann man bei Nachfragen gezielt eine Person ansprechen, die das Teil schon bearbeitet hat.

Eine weitere Ausprägung ist möglich, indem das Management-System Workflows unterstützt. Dann kann es dazu genutzt werden, eine Kontaktaufnahme über den Messenger zwischen zwei Rollen als Element in einen Workflow zu integrieren.

Folgendes Beispiel kann dies verdeutlichen:
Der Maschinenbediener bekommt erst die Freigabe für NC-Start, wenn er mit dem Konstrukteur Kontakt aufgenommen hat. Ein weiteres Anwendungsbeispiel ist die Verwendung eines solchen Systems im Support. Der Betreiber einer Anlage kann dazu ein System verwenden, das ihm die Anlage darstellt. Falls es eine Schwierigkeit mit einer Komponente der Anlage gibt, kann er über das Kommunikationssystem direkt Kontakt mit dem erforderlichen Ansprechpartner aufnehmen.

Der Kontext in diesem System ist ein Arbeitsgegenstand, um den sich die Kommunikation dreht. Jede der beteiligten Rollen kann eine ganz eigene Sicht auf diesen Gegenstand haben. Der erfinderische Schritt liegt darin, dass ein Kommunikationssystem eine Rollenvermittlungskomponente verwendet, um den Kontakt zwischen zwei Gesprächspartnern auf Grund ihrer jeweiligen Rolle herzustellen. Dazu nutzt die Rollenvermittlungskomponente Informationen aus bestehenden Managementsystemen. Auf Basis dieser Informationen wird anhand der angegebenen Rolle der betreffende Gesprächspartner ermittelt. Außerdem wird dafür gesorgt, dass der Diskussionsgegenstand in der jeweils passenden Arbeitsumgebung dargestellt wird, und es wird ermöglicht, eine Nachricht an einen Empfänger zu hinterlegen, der zu diesem Zeitpunkt noch nicht bestimmt ist. Schließlich wird ermöglicht die Kontaktaufnahme über das Kommunikationssystem als Aktion in einen geplanten Workflow im Managementsystem zu integrieren.

Ein Vorteil eines solchen Systems ist, dass die Suche nach zuständigen Ansprechpartnern entfällt. Wenn ein solches System direkt in eine Anwendung integriert wird, hat man immer die Ansprechpartner zur aktuellen Aufgabe zur Verfügung, ohne in andere Softwaretools (PLM-System, Email-Programm, Telefonverzeichnis) wechseln zu müssen. Dies hat besonders Vorteile, wenn man sich vorstellt, ein solches System beispielsweise auf der Maschinensteuerung einer Werkzeugmaschine zur Verfügung zu stellen. Der Maschinenbediener kann dort nur umständlich andere Anwendungen öffnen und Personen suchen. Wenn die Kommunikationssoftware jedoch in die Bediensoftware der Maschinensteuerung integriert ist, wird dies eine zielgerichtete Kommunikation unterstützen.

Darüber hinaus ergibt sich eine Möglichkeit, innerhalb eines dynamischen Prozesses, wie z.B. der Teilefertigung, eine Kommunikation über den gesamten Prozess zu ermöglichen. In einem solchen Prozess ist beispielsweise bereits definiert, dass ein Teil auf einer Maschine eines bestimmten Typs gefertigt wird. Auf welcher konkreten Maschine und von welchem Maschinenbediener ist aber noch nicht bekannt. Falls der NC-Programmierer den "zukünftigen" Maschinenbediener, z.B. noch auf eine Besonderheit hinweisen möchte, kann er über das System eine Nachricht oder Message an die Rolle "Maschinenbediener" im Kontext dieses Programms schicken. Sobald eine Person diese Rolle einnimmt, würde der NC-Programmierer die Nachricht erhalten.

Da die Kommunikation nicht direkt an Personen gebunden ist, sind auch Funktionen umsetzbar, wie z.B. das Unterstützen von Vertretungsregelungen. Wenn die eigentlich zuständige Person nicht verfügbar ist, wird der Vertreter in die Kommunikation eingebunden. Im Falle von weltweit operierenden Unternehmen ergeben sich auch Vorteile beim Support. Wenn beispielsweise ein Maschinenbediener in einem Fertigungswerk in den USA während der Nachtschicht die Unterstützung eines NC-Programmierers benötigt, geht er über den in seine Maschinenbediensoftware integrierten Messenger.

Da in der Nacht sein Kollege in den USA nicht verfügbar ist, stellt das System automatisch die Verbindung mit einem geeigneten Kollegen her, z.B. in Deutschland.

Ein weiterer Vorteil ist, dass die Kommunikationspartner das Teil in einer für sie relevanten Sicht dargestellt bekommen. Das ist ein großer Unterschied zu bereits verbreiteten Lösungen für Desktopsharing. Beim Desktopsharing sehen die Gesprächspartner eine identische Sicht einer Arbeitsumgebung. Wenn beispielsweise der Maschinenbediener die Auswirkung eines anderen Werkzeuges auf die Geometrie des Fertigteils diskutieren möchte, hilft dem Konstrukteur die Sicht auf das NC-Programm des Maschinenbedieners allerdings nicht weiter. Er benötigt ein 3D-Modell, um die Änderung bewerten zu können. Bei bisherigen Lösungen muss er diese im PLM-System suchen und dann anschließend mit der geeigneten Anwendung öffnen. Durch die Verwendung des beschriebenen Systems könnte dies durch das System gehandhabt werden. Auf diese Weise werden Missverständnisse und Fehler vermieden. Von Beginn der Kommunikation an hat jede Person ihre passende Sicht auf das Teil. Das beschleunigt den Prozess deutlich.

Im Anwendungsbeispiel des Supports in einer Produktionsanlage wird es insbesondere bei komplexen Anlagen auf diese Weise erheblich einfacher den zuständigen Ansprechpartner zu kontaktieren.

Weiter ermöglicht es auch unerfahreneren Mitarbeitern effektiver zu arbeiten, weil sie im Problemfall schneller Unterstützung für das konkrete Problem bekommen.

Für den Supportleistenden bietet das System den Vorteil, dass er beispielsweise sofort die für ihn relevante Dokumentation sieht. So würde der Elektroniker beispielsweise die Schaltpläne sehen, während der Kundendienst die Wartungspläne dargestellt bekommt.

Im Folgenden werden die Erfindung und deren Ausführungsformen anhand der Zeichnungen näher beschrieben. Hierbei zeigen
FIG 1 eine schematische beispielhafte Ausführungsform eines Systems, um eine Kommunikation zwischen Kommunikationsteilnehmern bereitzustellen unter Verwendung einer Rollenvermittlungs-Komponente;
FIG 2 ein erstes Ausführungsbeispiel eines Auswahlmenüs; und
FIG 3 ein zweites Ausführungsbeispiel eines Auswahlmenüs.

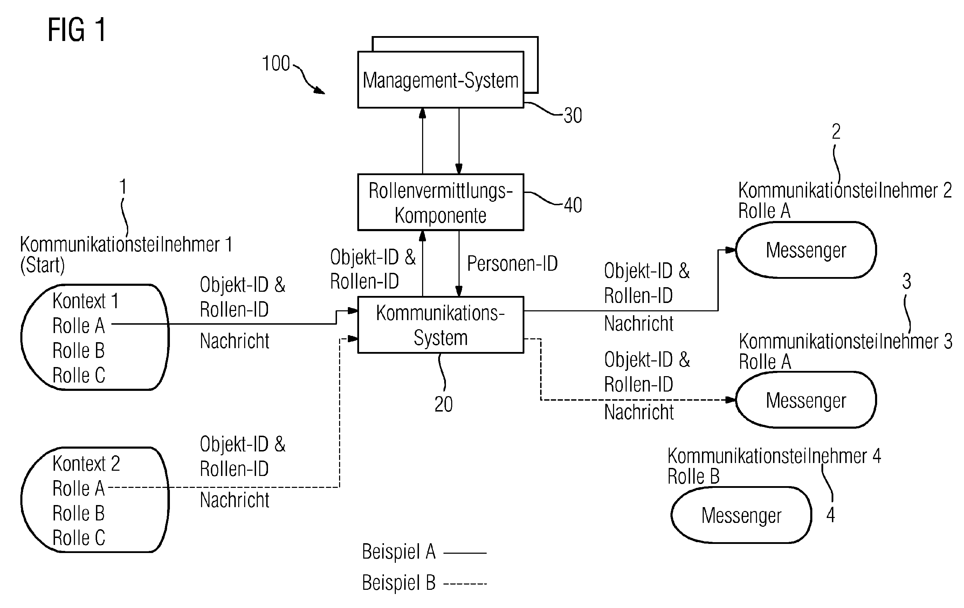

FIG 1 zeigt eine schematische beispielhafte Ausführungsform eines Systems 100 zur Unterstützung einer Kommunikation zwischen einer Vielzahl von Kommunikationsteilnehmern 1, 2, 3, 4, die an einem Arbeitsprozess beteiligt sind und über einen Arbeitsgegenstand kommunizieren möchten. Die Kommunikationsteilnehmer 1, 2, 3, 4 haben parallelen Zugriff auf ein Kommunikations-System 20, das beispielsweise als Telekommunikationssystem ausgebildet ist, wobei die Kommunikationsteilnehmer 1, 2, 3, 4 über das Internet oder ein firmeninternes Intranet in Verbindung stehen.

Ferner weist das System 100 der FIG 1 ein oder eine Mehrzahl von Management-Systemen 30 auf, die Informationen über einen Arbeitsprozess zur Verfügung stellen können. Ferner weist das System 100 eine zentrale Einheit 40 auf, die als Rollenvermittlungs-Komponente ausgebildet ist. Die Rollenvermittlungs-Komponente 40 steht mit dem Kommunikations-System 20 und dem Management-System 30 in Verbindung. Ferner verfügt die Rollenvermittlungs-Komponente 40 über Information, dass ein erster Kommunikationsteilnehmer 1 eine erste Anfrage (Beispiel A) gestartet hat. Hierzu empfängt das Kommunikationssystem eine Objekt-ID und eine Rollen-ID zur ersten Anfrage von dem Kommunikationsteilnehmer 1. Dieser möchte eine Ansprechperson für einen Kontext 1 oder einen Arbeitsgegenstand, beispielsweise für eine Anfrage zu einer technischen Zeichnung an einen technischen Zeichner und sendet eine Nachricht, die von der Rollenvermittlungs-Komponente 40 analysiert wird. Die Rollenvermittlungs-Komponente 40 greift danach auf Information des Management-Systems 30 zu, um einen geeigneten Kommunikationspartner zu finden. Die Rollenvermittlungs-Komponente 40 schlägt aufgrund der Objekt-ID und der Rollen-ID, die durch die Anfrage des ersten Kommunikationsteilnehmer 1 automatisch generiert wird, einen zweiten Kommunikationsteilnehmer 2 vor und stellt zu diesem über das Kommunikations-System 20 eine Kommunikationsverbindung her.

In einer weiteren Anfrage des ersten Kommunikationsteilnehmers 1 (Beispiel B) möchte dieser zu einem anderen Kontext (Kontext 2) einen Ansprechpartner erhalten, beispielsweise für eine Rückfrage zu einem Schaltplan an die Rolle eines Elektrikers. In diesem Fall sind Objekt-ID und Rollen-ID verschieden im Vergleich zu dem vorherigen Fall (Beispiel A). Die Objekt-ID und die Rollen-ID gelangen über das Kommunikations-System 20 erneut zu der Rollenvermittlungs-Komponente 40. Diese erhält Information von dem Management-System 30, so dass ein dritter Kommunikationsteilnehmer 3 in Frage kommt. Zu diesem Kommunikationsteilnehmer 3 wird über das Kommunikations-System 20, initiiert durch die Rollenvermittlungs-Komponente 40, eine Kommunikationsverbindung aufgebaut. Ferner ist der Rollenvermittlungs-Komponente 40 auch ein vierter Kommunikationsteilnehmer 4 bekannt, der jedoch weder für die erste Anfrage noch für die zweite Anfrage geeignet ist, weil dieser Teilnehmer die Rolle eines Verkaufsmanagers hat.

Mit anderen Worten wird in FIG 1 über das Kommunikations-System 20 über die Rollenvermittlungskomponente 40 bei dem Management-System 30 nachgefragt, wer in einem gegebenen Kontext eine spezifische Rolle inne hat. In FIG 1 gelangt der erste Kommunikationsteilnehmer 1 in unterschiedlichen Kontexten für die gleiche Rolle A zu unterschiedlichen Kommunikationsteilnehmern 2 bzw. 3.

Außer der Verbindung mit statischen Zuständigkeiten ist auch eine dynamische Auflösung des Kontexts vorstellbar: So könnte die Rollenvermittlungskomponente über weitere Management-Systeme, wie z.B. einem Personalverwaltungs-System oder einem Kalender-System bei Abwesenheiten automatisch den richtigen Vertreter ermitteln.

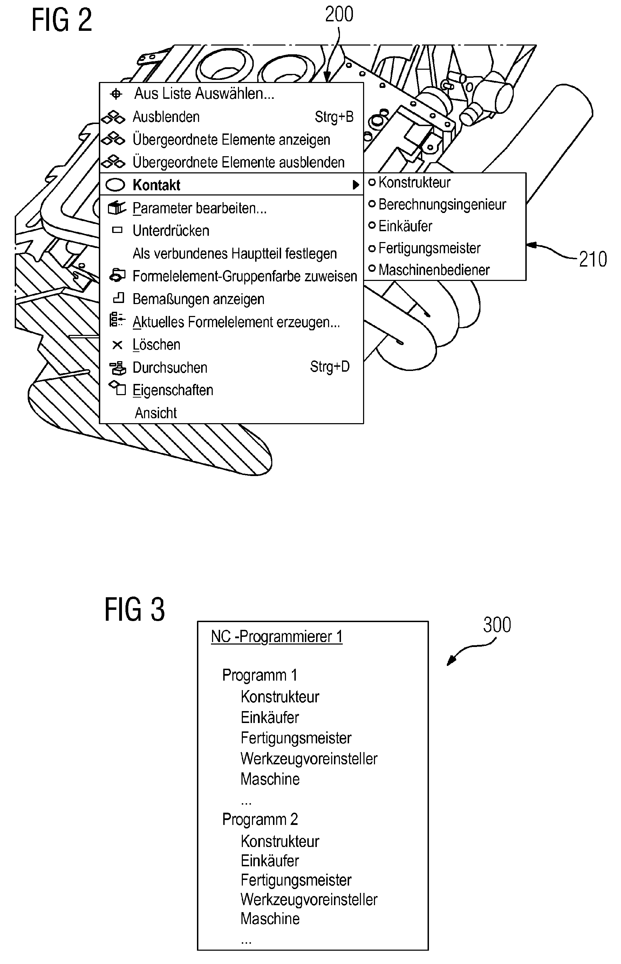

In FIG 2 und in FIG 3 ist jeweils ein Ausführungsbeispiel eines Auswahlmenüs dargestellt, das rollenbasiert ist.

In FIG 2 ist eine Menüauswahl 200 dargestellt, die innerhalb eines Zeichenprogramms vorhanden ist. In FIG 2 wird unter dem Menüpunkt "Kontakte" eine rollenbasierte Auswahl 210 bereitgestellt, so dass der technische Zeichner von dem Zeichenprogramm aus direkt eine Kontaktanfrage starten kann, die über ein Kommunikationssystem, wie in FIG 1 dargestellt, einen oder mehrere Kommunikationsteilnehmer erreicht.

FIG 3 ist speziell für einen NC-Programmierer eine Übersicht 300 in Form einer Liste dargestellt, welche Rollen er inne hat, da er an einem ersten Programm 1 und an einem zweiten Programm 2 arbeitet und hierfür in der Rolle des NC-Programmierers als Ansprechpartner und Kommunikationsteilnehmer zur Beantwortung von Fragen zur Verfügung steht. Eine solche Übersichtsstruktur, wie in FIG 3 dargestellt, kann beispielsweise in dem Computer des NC-Programmierers hinterlegt sein und/oder in einem zentralen Management-System, wie es in FIG 1 dargestellt ist.

### Bezugszeichenliste

- 1: erster Kommunikationsteilnehmer
- 2: zweiter Kommunikationsteilnehmer
- 3: dritter Kommunikationsteilnehmer
- 4: vierter Kommunikationsteilnehmer
- 20: Kommunikations-System
- 30: Management-Systemen
- 40: Rollenvermittlungs-Komponente
- 100: System
- 200: Menüauswahl
- 210: Auswahl
- 300: Übersicht

## Patentansprüche

1. Verfahren zur Unterstützung einer Kommunikation zwischen einer Vielzahl von Kommunikationsteilnehmern (1, 2, 3, 4), die an einem Arbeitsprozess beteiligt sind und über einen Arbeitsgegenstand kommunizieren, aufweisend
Herstellen einer Kommunikation zwischen mindestens zwei Kommunikationsteilnehmern (1, 2, 3, 4) unter Berücksichtigung ihrer jeweiligen Rolle innerhalb des Arbeitsprozesses

2. Verfahren nach Anspruch 1, ferner aufweisend
Anfragen zum Herstellen einer Kommunikation durch Senden einer Objekt-Identität, die den Arbeitsgegenstand charakterisiert, und einer Rollen-Identität, die die Rolle innerhalb des Arbeitsprozesses charakterisiert.

3. Verfahren nach Anspruch 1 oder Anspruch 2, ferner aufweisend
Bereitstellen eines Namens einer Person, die als Kommunikationsteilnehmer (1, 2, 3, 4) vorhanden ist.

4. Verfahren nach einem der Ansprüche 1 bis 3, ferner aufweisend
Verwenden von Information, die in einem Management-System (30) hinterlegt ist, um einen Kommunikationsteilnehmer (1, 2, 3, 4) zu ermitteln.

5. Verfahren nach einem der Ansprüche 1 bis 4, ferner aufweisend
Darstellen des Arbeitsgegenstandes in einer Arbeitsumgebung des Kommunikationsteilnehmers (1, 2, 3, 4) in Abhängigkeit seiner Rolle.

6. Verfahren nach einem der Ansprüche 1 bis 5, ferner aufweisend
paralleles Herstellen einer Kommunikation zwischen mehreren Kommunikationsteilnehmern (1, 2, 3, 4) in Bezug auf einen Arbeitsgegenstand.

7. Verfahren nach einem der Ansprüche 1 bis 6, ferner aufweisend
Bereitstellen einer Liste mit Kommunikationsteilnehmern (1, 2, 3, 4), wobei die Liste individuell an die Rolle der Person angepasst ist, die einen Kommunikationsteilnehmer (1, 2, 3, 4) sucht.

8. Verfahren nach einem der Ansprüche 1 bis 7, ferner aufweisend
Berücksichtigung von Abwesenheiten von Kommunikationsteilnehmern (1, 2, 3, 4) bei der Herstellung einer Kommunikation mit einem Kommunikationsteilnehmer (1, 2, 3, 4).

9. Verfahren nach einem der Ansprüche 1 bis 8, ferner aufweisend
Unterstützen eines Workflows, indem eine Bedingung vorgegeben wird, unter der die Bearbeitung einer Teilaufgabe des Arbeitsprozesses begonnen werden kann.

10. System (100) zur Unterstützung einer Kommunikation zwischen einer Vielzahl von Kommunikationsteilnehmern (1, 2, 3, 4), die an einem Arbeitsprozess beteiligt sind und über einen Arbeitsgegenstand kommunizieren, aufweisend
ein Kommunikationssystem (20), auf das eine Vielzahl von Kommunikationsteilnehmern (1, 2, 3, 4) Zugriff haben;
ein Management-System (30), das Information über den Arbeitsprozess zur Verfügung stellt,
**gekennzeichnet durch**
eine Rollenvermittlungs-Komponente (40), die mit dem Kommunikationssystem (20) und dem Management-System (30) in Verbindung steht und die ein Herstellen eines Kontaktes zwischen mindestens zwei Kommunikationsteilnehmern (1, 2, 3, 4) unter Berücksichtigung ihrer jeweiligen Rolle innerhalb des Arbeitsprozesses einleitet.

11. System nach Anspruch 10, wobei die Rollenvermittlungs-Komponente (40) Mittel aufweist, um eine Rolle in Verbindung mit dem Arbeitsgegenstand einem Kommunikationsteilnehmer (1, 2, 3, 4) zuzuordnen.
